# FASCICULE DE BREVET EUROPEEN

(11) **EP 0 813 003 B1**
(45) Date de publication et mention de la délivrance du brevet: **11.12.2002**
(21) Numéro de dépôt: 97109350.5
(22) Date de dépôt: 09.06.1997
(51) Int. Cl.: F16H 59/70

(54) **Dispositif de détection produisant un signal représentatif de la sélection et/ou de l'engagement d'un rapport de boîte de vitesses**
Aufnehmer zur Erzeugung eines Signals, das eine Gangwahl und/oder einen eingelegten Getriebegang anzeigt
Detecting device to deliver a signal representative of selection and/or engagement of a transmission gear

(30) Priorité: 12.06.1996 FR 9607275
(43) Date de publication de la demande: 17.12.1997
(73) Titulaire: VALEO EMBRAYAGES, 80009 Amiens Cedex 1 (FR)
(72) Inventeur: Phelps, Nicolas, 75011 Paris (FR)
(74) Mandataire: Gamonal, Didier

(56) Documents cités:
- EP-A- 0 383 688
- WO-A-90/04122
- WO-A-95/21073
- GB-A- 2 220 450
- GB-A- 2 277 784

## Description

La présente invention concerne un dispositif de détection qui produit un signal représentatif de la sélection et/ou de l'engagement d'un rapport de boîte de vitesses à arbre de commande, notamment de véhicule automobile, destiné notamment à être exploité par un circuit de pilotage d'un mécanisme de commande d'un embrayage associé à la boîte de vitesses, ledit circuit de pilotage comportant un calculateur tel qu'un microprocesseur.

Un tel dispositif est décrit par exemple dans le document EP-A-0 383 688 et comporte un premier capteur de position relié à des moyens de passage de vitesses et un second capteur de position relié à des moyens de sélection de vitesses. L'un des capteurs détecte une rotation de l'arbre de commande de la boîte de vitesses tandis que l'autre capteur détecte une translation de l'arbre de commande de la boîte de vitesses.

Dans ce document il est prévu une timonerie de manoeuvre comportant en amont un levier de commande et commandant en aval des moyens de passage et/ou de sélection des vitesses comportant l'arbre de commande de la boîte de vitesses.

Cet arbre est susceptible d'être commandé par la timonerie, d'une part, en rotation entre des positions limites, par exemple de passages de vitesse, pour notamment passage de la première à la deuxième vitesse et, d'autre part, en translation pour par exemple sélectionner une ligne de passage et par exemple passer de la deuxième à la troisième vitesse.

Ces capteurs sont reliés à un circuit de pilotage, tel qu'un circuit électronique de traitement et de commande comportant un calculateur, pour d'une part, activer un mécanisme de commande de l'embrayage, appelé système automatique de manoeuvre, et, d'autre part, traiter notamment les informations reçues par lesdits capteurs ainsi que par d'autres capteurs tels ceux détectant la vitesse de rotation du vilebrequin du moteur du véhicule, la vitesse de rotation de l'arbre d'entrée de la boîte de vitesses et la position de la pédale d'accélérateur.

Dans ce document les capteurs sont du type analogique et consistent en des potentiomètres dont les curseurs sont reliés cinématiquement par des transmissions mécaniques à l'arbre de commande de la boîte de vitesses.

Cet arbre de commande ainsi qu'on le sait oscille en permanence ce qui entraîne un mouvement permanent des parties mobiles des capteurs (les curseurs) et donc une usure prématurée des capteurs.

La présente invention a pour objet de pallier de manière simple et économique cet inconvénient et donc d'augmenter la durée de vie du dispositif de détection.

Suivant l'invention un dispositif de détection du type sus-indiqué et défini par les caractéristiques du préambule de la revendication 1 est caractérisé en ce qu'un jeu est prévu au sein au moins de l'un des éléments capteur - transmission mécanique reliant celui-ci à l'arbre de commande de la boîte de vitesses, ledit jeu étant déterminé en sorte que les oscillations permanentes de l'arbre de commande de la boîte de vitesses soient atténuées le plus possible, et en ce que ce jeu est compensé par le calculateur de façon à ne pas affecter la précision de la mesure.

Grâce à l'invention l'usure des capteurs est réduite et lors d'un changement de rapport étagé de la boîte de vitesses, l'arbre de commande de la boîte de vitesses vient d'abord rattraper le jeu directement ou indirectement avant d'entraîner le capteur. En connaissant le sens du déplacement il suffit donc d'ajouter à la position mesurée la moitié du jeu pour retrouver la position exacte.

Ce jeu peut être réalisé à l'aide de moyens d'engrènement à jeu. Par exemple un axe d'articulation peut être engagé dans une ouverture oblongue définissant un jeu. En variante les moyens d'engrènement à jeu peuvent consister en un jeu circonférentiel prévu entre deux secteurs dentés.

La description qui va suivre illustre l'invention en regard des dessins annexés dans lesquels :
- la figure 1 est un schéma synoptique en perspective d'un dispositif de commande d'une boîte de vitesses mécanique d'un véhicule automobile, associée à un embrayage à sec piloté par un système de manoeuvre automatique ;
- la figure 2 est une vue en perspective éclatée d'un dispositif de détection comportant deux capteurs mécaniquement groupés ;
- la figure 3 est une vue d'un diagramme indiquant en ordonnée la mesure effectuée par le calculateur et en abscisses la position de l'arbre de commande.

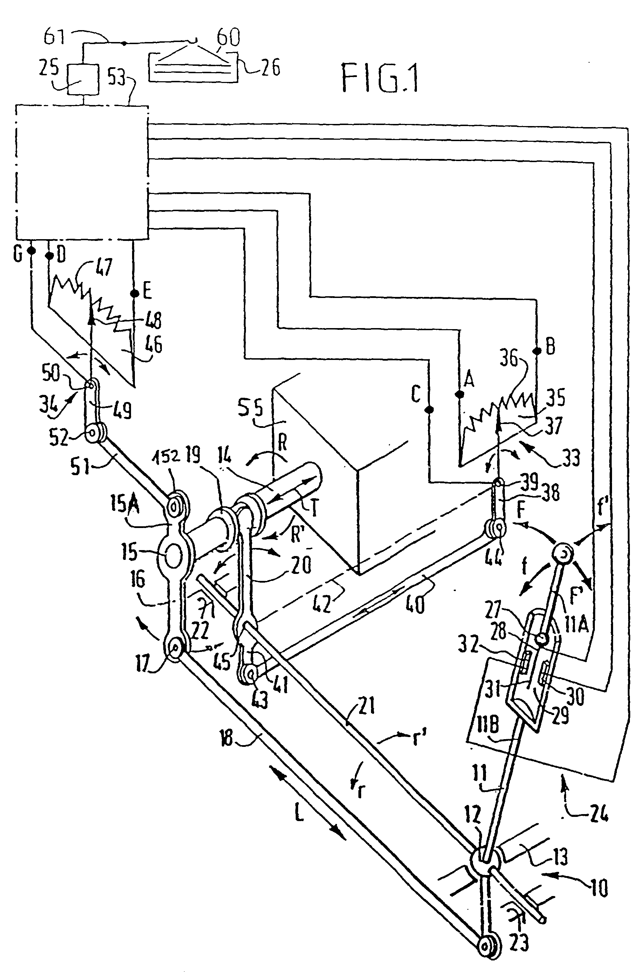

A la figure 1 est représenté un dispositif de détection à capteurs 33,34 qui produit un signal, représentatif de la sélection et/ou de l'engagement d'un rapport de boîte de vitesses 55 pour véhicule automobile, destiné à être exploité par un circuit de pilotage d'un mécanisme de commande d'un embrayage 26 à diaphragme 60 associé à la boîte de vitesses 55, ici du type mécanique à pignons et à rapports étagés.

Pour mémoire on rappellera que le mécanisme de commande de l'embrayage comporte un actionneur 25 à ressort compensateur commandé par un calculateur 53, tel qu'un microprocesseur alimenté électriquement.

L'actionneur 25 comporte usuellement un moteur électrique, qui, par l'intermédiaire d'une transmission mécanique, agit directement ou indirectement, par l'intermédiaire d'un vérin hydraulique, sur une fourchette de débrayage 61 apte à manoeuvrer une butée de débrayage en appui sur l'extrémité interne des doigts du diaphragme 60 prenant appui sur un couvercle solidaire d'un plateau de réaction et portant un plateau de pression.

Lorsque le moteur électrique est activé par le calculateur 53, la fourchette de débrayage 61 manoeuvre la butée de débrayage, qui fait basculer le diaphragme 60 et fait cesser son action sur le plateau de pression afin de libérer les garnitures de friction du disque de friction, solidaire en rotation de l'arbre d'entrée de la boîte de vitesses, pour désengager l'embrayage.

Ces garnitures de friction sont normalement serrées entre les plateaux de pression et de réaction de l'embrayage solidaires, ainsi que le couvercle, en rotation du vilebrequin du moteur à combustion interne du véhicule automobile.

Ainsi normalement l'embrayage est engagé. La manoeuvre de l'embrayage est réalisée grâce à des informations que reçoit le calculateur 53 pour activer l'actionneur 25 selon des programmes prédéterminés, notamment un programme de démarrage et un ou des programmes dits de roulage lorsque le véhicule roule.

Pour ce faire le calculateur 53 reçoit des informations notamment concernant la position de la pédale d'accélérateur, la vitesse de rotation des arbres mené et menant ainsi que des signaux provenant d'un détecteur d'effort 24 à plots de contact 31 et 32 reliés par des fils électriques au calculateur 53.

Ces plots appartiennent ici à des interrupteurs électriques. Le plot 31 est porté ici par un doigt 28 du tronçon amont 11A du levier 11 de changement de vitesses, tandis que les plots 30 et 32 sont disposés dans un logement 29 appartenant à un tronçon aval 11B du levier 11 relié à une timonerie 10 de l'arbre de commande 14 de la boîte de vitesses 55.

Les tronçons 11A et 11B sont attelés élastiquement et admettent des débattements grâce à une articulation 27.

Ainsi on peut établir des contacts entre les plots 30-31 et 32-31 pour établir des circuits électriques et envoyer des informations au calculateur 53 tel qu'un microprocesseur alimenté électriquement.

Le détecteur d'effort 24 détecte ainsi l'intention du conducteur de changer de rapport.

La timonerie 10 comporte une rotule 12 montée sur un châssis fixe 13, des tringles 21,18, des paliers fixes 22,23, un flasque 15, un bras 16, une articulation 17 et une fourchette 20 engagée dans une gorge 19 de l'arbre 14 propre à manoeuvrer des pignons baladeurs, que présente la boîte de vitesses pour définition de rapports étagés, lesdits pignons faisant partie d'ensembles de synchronisation et de crabotage.

Il est formé ainsi des moyens de sélection et de passage des vitesses.

L'arbre de commande présente à l'intérieur de la boîte 55 un bras propre à commander des coulisseaux. L'arbre 14 est ainsi susceptible d'être commandé en rotation selon les flèches R,R' entre des positions limites de passage de vitesses par l'intermédiaire de la tringle 18 déplacée par le levier 11 selon la ligne L.

L'arbre 14 est susceptible également d'être déplacé en translation pour sélectionner une ligne de passage de vitesses selon le sens T par l'intermédiaire de la tringle 21 se déplaçant selon les flèches r,r' sous l'action d'un levier 11 qui se déplace ainsi selon les flèches f,f' et F,F'.

Pour la commande automatique de l'embrayage 26 il importe de connaître le rapport de boîte de vitesses engagé pour notamment éviter que le véhicule ne démarre lorsque par exemple la deuxième vitesse est engagée.

A cet effet il est prévu un dispositif de détection comportant un premier capteur 34, sensible ici à un passage des vitesses, pour détecter la rotation de l'arbre 14 et un deuxième capteur 33, sensible ici à une sélection de vitesses, pour détecter une translation de l'arbre 14 sachant, pour passer par exemple de la deuxième vitesse à la troisième vitesse, que l'on effectue une translation de long de la ligne de points morts. Les capteurs 33 et 34 sont à l'image l'un de l'autre et consistent ici en des potentiomètres 35,46 avec un curseur 37,48 se déplaçant sur une résistance 36,47 aux bornes A,B-D,E de laquelle est appliquée une tension.

La différence de potentiel entre la borne C,G du curseur 37,48 et la borne A-D ou B-E de la résistance 36,47 est représentative du déplacement de l'arbre 14.

Pour ce faire le curseur 37 est relié par une transmission mécanique à l'arbre de commande 14. Ici cette transmission consiste en un parallélogramme 39,40,41,42 relié à la fourchette 20, ledit parallélogramme étant articulé autour des points 39,43,44 et 45, le bras 41 constituant un prolongement de la fourchette 20 au-delà du point 45 de solidarisation de la tringle 21 à la fourchette 20.

De même le curseur 48 est relié à l'arbre de commande 14 par une transmission mécanique.

Plus précisément le curseur 48 est relié au flasque 15 par un prolongement 15a du flasque 15, des bras 49,50 et des articulations 52,152.

Ainsi qu'on le sait l'arbre de commande 14 vibre en permanence lorsque le moteur tourne du fait notamment de la présence des pignons. Ceci si l'on ne prend pas de mesure spécifique entraîne en permanence un mouvement des curseurs 37,48 et donc des usures prématurées des capteurs 37,34.

Pour ce faire, suivant l'invention, on introduit un jeu au sein au moins de l'un des éléments - capteurs 33,34 - transmission mécanique associée reliant celui-ci à l'arbre de commande de la boîte de vitesses, ledit jeu étant déterminé en sorte que les oscillations permanentes de l'arbre de commande 14 de la boîte de vitesses 55 soient atténuées le plus possible. On compense ce jeu par le calculateur 53 de façon à ne pas affecter la précision de la mesure. Ainsi ce jeu est compensé de façon logicielle par le calculateur 53.

Ici on prévoit un jeu pour chaque élément capteur 33,34 - transmission mécanique associée le reliant à l'arbre de commande 14.

Ce jeu est obtenu à l'aide de moyens d'engrènement à jeu. Par exemple le levier 51 peut être en deux parties montées mobiles axialement l'une par rapport à l'autre à l'encontre de moyens élastiques et de moyens de crabotage.

Normalement les deux parties sont écartées l'une de l'autre et viennent en prise après rattrapage d'un jeu lorsque l'on manoeuvre la tringle 18 et que l'on écrase le ressort.

Après écrasement du ressort, on effectue par exemple un crabotage par coopération de formes.

En variante on peut prévoir des moyens d'engrènement à jeu au niveau de l'articulation 52 comportant par exemple un axe porté par le levier 49 et traversant une ouverture pratiquée dans le levier 51.

Dans ce cas l'ouverture du levier 51 est de forme oblongue en sorte qu'après un rattrapage de jeu le levier 51 vient par l'un des bords latéraux de son ouverture en prise avec l'axe porté par le levier 49.

En variante on peut prévoir un jeu au niveau du curseur 48 par exemple au niveau de l'arbre d'entraînement de celui-ci.

Bien entendu le jeu peut être prévu au niveau de l'articulation 152, l'arbre porté par le prolongement 15A du flasque 15 pénétrant à jeu dans une ouverture oblongue réalisée dans le levier 51.

On peut prévoir un jeu au niveau du curseur 37. Ce jeu peut être prévu également dans les articulations 43 et 44, un axe traversant une ouverture oblongue.

En variante on peut prévoir des dentures en forme de cannelures sur l'axe 14, ces dentures coopérant à jeu circonférentiel avec des dentures complémentaires pratiquées dans l'ouverture du flasque 15 traversé par l'arbre 14.

Après rattrapage d'un jeu circonférentiel entre les dentures de l'arbre 14 et les dentures du flasque 15 on entraîne celui-ci.

En variante on peut prévoir un jeu au niveau de la fourchette 20 et plus particulièrement entre la gorge 19 et l'extrémité profilée de la fourchette 20. D'une manière générale on peut prévoir un jeu dans l'un au moins et capteur et/ou sa transmission mécanique associée.

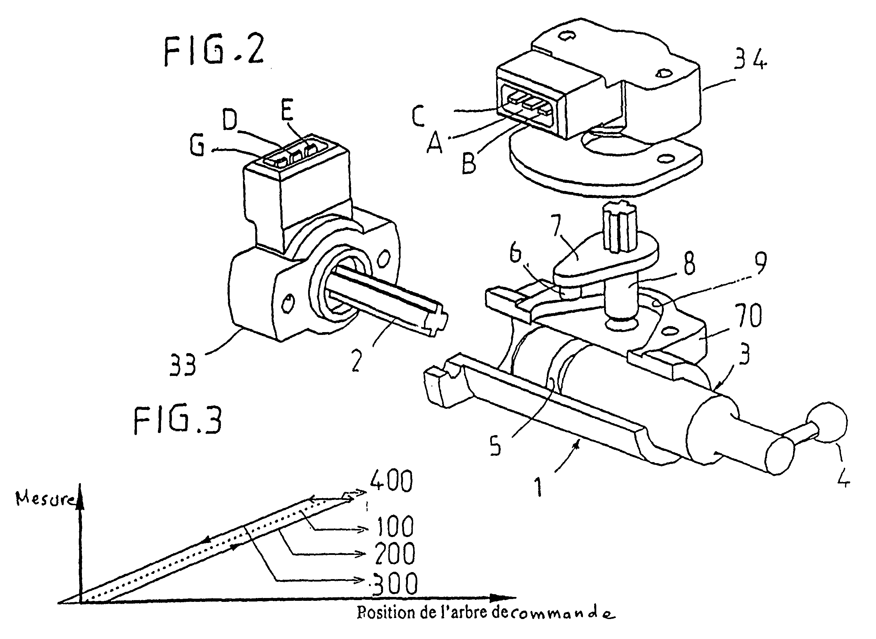

Bien entendu le dispositif de détection peut être plus compact. Il peut comporter comme visible à la figure 2 un support 1 propre à être fixé sur le carter de la boîte de vitesses et portant les capteurs 33 et 34 en forme de potentiomètre.

Dans ce cas le capteur 33 comporte un arbre d'entrée 2 cannelé pénétrant à l'intérieur d'un alésage interne rainuré d'un manchon de manoeuvre 3 portant à son extrémité libre des moyens 4 à rotule pour son accouplement à l'arbre de commande 14.

Un jeu circonférentiel existe entre l'arbre cannelé 2 et l'alésage interne rainuré du manchon de manoeuvre 3. Ce manchon 3 présente à sa périphérie externe une gorge 5 dans laquelle pénètre à jeu circonférentiel un doigt cylindrique 6 solidaire d'un bras 7 lui-même solidaire d'une tige 8 montée à articulation dans le fond d'une creusure 9 portée par un appendice 70 appartenant au corps 1 à l'intérieur duquel se déplace linéairement et en rotation le manchon 3 accouplé à l'arbre de commande 14. La creusure 9 est fermée par le capteur 34 monté sur l'appendice 70 à l'aide d'organes de fixation tels que des vis ou des boulons.

La tige 8 présente à son extrémité supérieure une portion cannelée propre à entraîner le curseur du capteur 34.

Bien entendu le corps 1, avantageusement en matière moulable ,de préférence en matière plastique à faible coefficient de frottement, comporte à son extrémité arrière une bride pour la fixation du capteur 33 à l'aide d'organes de fixation tels que des boulons ou des vis de fixation.

Les capteurs 33,34 sont montés perpendiculairement l'un par rapport à l'autre.

Le doigt 6 appartient à une biellette comprenant, outre le doigt 6, le bras 7, la tige 8 à extrémité supérieure cannelée.

Ainsi qu'on l'aura compris toute translation du manchon de manoeuvre 3 à l'intérieur de son corps 1 de guidage, ici globalement de forme tubulaire, entraîne après rattrapage d'un jeu linéaire une rotation de la biellette précitée, le doigt cylindrique 6 coopérant alors avec l'un des flancs de la gorge 5, en sorte qu'il est formé des moyens d'engrènement à jeu actif en translation entre la gorge 5 et le doigt 6.

Bien entendu en variante le doigt 6 peut être monté sans jeu dans la gorge 5 du manchon de manoeuvre 3, un jeu circonférentiel existant alors entre la portion d'extrémité cannelée de la tige 8 et le curseur du potentiomètre 34.

Lorsque le manchon 3 est entraîné en rotation, celui-ci entraîne en rotation l'arbre de commande 2 du curseur du potentiomètre 33 après rattrapage d'un jeu entre les cannelures de l'arbre 2 et les rainures du manchon 3.

En variante on peut prévoir un jeu au niveau de la rotule portée par le manchon de manoeuvre 3.

En variante des moyens d'engrènement à jeu circonférentiel (jeu de dentures) peuvent intervenir entre le curseur du capteur 33 et l'arbre de commande 2, les cannelures de l'arbre 2 pénétrant sans jeu dans les rainures du manchon 3.

Dans tous les cas on introduit dans le capteur 33,34 ou dans la rotule ou au niveau du manchon de manoeuvre 3 un jeu suffisant pour que les oscillations permanentes de l'arbre 14 soient atténuées le plus possible.

Le doigt 6, par exemple, est entraîné après rattrapage d'un jeu de translation tandis que l'arbre 2 est entraîné en rotation après rattrapage d'un jeu circonférentiel.

Dans tous les cas lors d'un changement de rapport, les déplacements des curseurs sont monotones. L'arbre de commande 14 venant d'abord rattraper directement ou indirectement le jeu de la liaison avant d'entraîner le capteur.

En connaissant le sens du déplacement, il suffit donc d'ajouter à la position mesurée la moitié du jeu de la liaison pour retrouver la position exacte.

Pour plus de précisions on se reportera à la figure 3 dans laquelle on a représenté en abscisses la position de l'arbre de commande et en ordonnée la position mesurée.

La courbe 100 représente la courbe de l'art antérieur sans jeu, la courbe 200 correspond à un mouvement croissant et la courbe 300 à un mouvement décroissant. Le jeu portant la référence 400.

Connaissant le jeu, le calculateur ajoute alors à la position mesurée la moitié du jeu de la liaison pour retrouver la position exacte.

Bien entendu la présente invention n'est pas limitée à l'exemple de réalisation décrit, en particulier les capteurs 33,34 peuvent avoir une autre forme. Ils peuvent par exemple être du type optique. Les curseurs de la figure 1 étant remplacés par une tête de lecture portant une diode émettrice et une diode réceptrice, ladite tête se déplaçant en regard d'une piste fixe dotée de marques.

On appréciera que le dispositif de détection de la figure 2 est compact, peu onéreux, fiable et fait appel à des pièces simples et en nombre réduit.

En variante le passage des vitesses peut être réalisé par translation de l'arbre de commande 14 et la sélection des vitesses par rotation de l'arbre de commande 14. Tout ceci dépend de la constitution de la boîte de vitesses 55. Dans tous les cas un des capteurs 33,34 détecte la rotation de l'arbre 14 et l'autre la translation de l'arbre 14.

## Revendications

1. Dispositif de détection produisant un signal représentatif de la sélection et/ou de l'engagement d'un rapport de boîte de vitesses (55) à arbre de commande (14), notamment de véhicule automobile, destiné notamment à être exploité par un circuit de pilotage (24,53,25) d'un mécanisme de commande d'un embrayage (26) associé à la boîte de vitesses (25), ledit circuit de pilotage comportant un calculateur (53) tel qu'un microprocesseur et comportant deux capteurs (33,34) pour respectivement détecter la rotation et la translation de l'arbre de commande (14), lesdits capteurs étant reliés au calculateur (53) destiné, d'une part, à activer le mécanisme de commande de l'embrayage et, d'autre part, à traiter les informations reçues par lesdits capteurs reliés chacun à l'arbre de commande (14) de la boîte de vitesses (25) par une transmission mécanique (15A,152,51,52,49,50-41,40,38,42,39,44, 43,45), **caractérisé en ce qu'**un jeu est prévu au sein au moins de l'un des éléments capteur (31,32) - transmission mécanique reliant celui-ci à l'arbre de commande de la boîte de vitesses (55), ledit jeu étant déterminé en sorte que les oscillations permanentes de l'arbre de commande (14) de la boîte de vitesses soient atténuées le plus possible, et **en ce que** ce jeu est compensé par le calculateur (53) de façon à ne pas affecter la précision de la mesure.

2. Dispositif de détection selon la revendication 1, **caractérisé en ce qu'**un jeu est prévu pour chaque élément capteur (33,34) - transmission mécanique associée.

3. Dispositif de détection selon la revendication 1 ou 2, **caractérisé en ce que** le jeu est formé à la faveur de moyens d'engrènement à jeu.

4. Dispositif de détection selon la revendication 3, **caractérisé en ce que** les moyens d'engrènement à jeu comportent un axe traversant à jeu une ouverture oblongue.

5. Dispositif de détection selon la revendication 3, **caractérisé en ce que** lesdits moyens d'engrènement à jeu consistent en un jeu circonférentiel intervenant entre des dentures.

6. Dispositif de détection selon la revendication 3, **caractérisé en ce que** le jeu intervient entre un doigt (6) porté par une pièce rotative (6,7,8) manoeuvrant l'un des capteurs, ledit doigt pénétrant à jeu dans une gorge (5) réalisée à la périphérie d'un manchon de manoeuvre (3) monté mobile à l'intérieur d'un corps (1) et portant à son extrémité libre des moyens (4) pour son accouplement à l'arbre de commande (14).

7. Dispositif de détection selon la revendication 6, **caractérisé en ce que** le manchon de manoeuvre (3) présente un alésage interne rainuré à l'intérieur duquel pénètre à jeu circonférentiel un arbre de commande (2) de l'autre capteur.

## Claims

1. A detecting device for producing a signal representing the selection and/or engagement of a gear ratio in a gearbox (55) having a control shaft (14), in particular for a motor vehicle, and particularly adapted to be operated by a control circuit (24, 53, 25) for an actuating mechanism of a clutch (26) associated with the gearbox (55), the said control circuit including a computer (53), such as a microprocessor, and including two sensors (33, 34) for detecting rotational and translational movement, respectively, of the control shaft (14), the said sensors being connected to the computer (53), which is arranged, firstly to actuate the control mechanism of the clutch, and secondly to process information received from the said sensors, each of which is coupled to the control shaft (14) of the gearbox (55) through a mechanical transmission (15A, 152, 52, 52, 49, 50 - 41, 40, 38, 42, 39, 44, 43, 45), **characterised in that** there is a clearance within at least one of the elements consisting of a sensor (31, 32) and a mechanical transmission coupling the latter to the control shaft of the gearbox (55), the said clearance being so determined that the permanent oscillations of the control shaft (14) of the gearbox are attenuated as much as possible, and **in that** the said clearance is compensated for by the computer (53), in such a way as not to affect the precision of the measurement.

2. A detecting device according to Claim 1, **characterised in that** there is a clearance for each of the elements consisting of the sensors (33, 34) and the associated mechanical transmission.

3. A detecting device according to Claim 1 or Claim 2, **characterised in that** the clearance is defined by a loose coupling means.

4. A detecting device according to Claim 3, **characterised in that** the loose coupling means comprise a rod extending, with a clearance, through an oblong aperture.

5. A detecting device according to Claim 3, **characterised in that** the said loose coupling means consist of a circumferential inter-tooth clearance.

6. A detecting device according to Claim 3, **characterised in that** the clearance is defined between a finger (6) carried by a rotatable member (6, 7, 8) for actuating one of the sensors, the said finger penetrating with a clearance into a groove (5) formed on the periphery of an actuating sleeve (3) which is mounted for movement in a body (1) and which carries at its free end means (4) for coupling it to the control shaft (14).

7. A detecting device according to Claim 6, **characterised in that** the actuating sleeve (3) has a splined internal bore, into which a control shaft (2) of the other sensor penetrates with circumferential clearance.

## Patentansprüche

1. Erfassungsvorrichtung, die ein für die Wahl und/oder das Einlegen eines Gangs eines Schaltgetriebes (55) mit Hauptwelle (14), insbesondere von Kraftfahrzeugen, repräsentatives Signal erzeugt, das insbesondere für die Auswertung durch eine Steuerungsschaltung (24, 53, 25) eines Mechanismus zur Betätigung einer mit dem Schaltgetriebe (55) verbundenen Kupplung (26) bestimmt ist, wobei die besagte Steuerungsschaltung einen Rechner (53), wie etwa einen Mikroprozessor, und zwei Geber (33, 34) zur Erfassung der Drehung bzw. der geradlinigen Verschiebung der Hauptwelle (14) umfaßt, wobei die besagten Geber mit dem Rechner (53) verbunden sind, der dazu bestimmt ist, einerseits den Betätigungsmechanismus der Kupplung zu aktivieren und andererseits die Informationen zu verarbeiten, die von den besagten Gebern kommen, die jeweils mit der Hauptwelle (14) des Schaltgetriebes (25) über eine mechanische Kraftübertragung (15A, 152, 51, 52, 49, 50-41, 40, 38, 42, 39, 44, 43, 45) verbunden sind, **dadurch gekennzeichnet, daß** ein Spiel im Innern wenigstens eines der Elemente Geber (31, 32) - mechanische Kraftübertragung vorgesehen ist, die diesen mit der Hauptwelle des Schaltgetriebes (55) verbindet, wobei das besagte Spiel so bestimmt ist, daß die ständigen Schwingungen der Hauptwelle (14) des Getriebes möglichst stark gedämpft werden, und daß dieses Spiel durch den Rechner (53) so ausgeglichen wird, daß die Präzision der Messung dadurch nicht beeinträchtigt wird.

2. Erfassungsvorrichtung nach Anspruch 1, **dadurch gekennzeichnet, daß** ein Spiel für jedes Element Geber (33, 34) - zugehörige mechanische Kraftübertragung vorgesehen ist.

3. Erfassungsvorrichtung nach Anspruch 1 oder 2, **dadurch gekennzeichnet, daß** das Spiel anhand von mit Spiel wirksamen Eingriffsmitteln gebildet wird.

4. Erfassungsvorrichtung nach Anspruch 3, **dadurch gekennzeichnet, daß** die mit Spiel wirksamen Eingriffsmittel eine Achse umfassen, die mit Spiel durch eine längliche Öffnung hindurchgehen.

5. Erfassungsvorrichtung nach Anspruch 3, **dadurch gekennzeichnet, daß** die besagten mit Spiel wirksamen Eingriffsmittel aus einem Umfangsspiel bestehen, das zwischen Zahnungen zum Einsatz kommt.

6. Erfassungsvorrichtung nach Anspruch 3, **dadurch gekennzeichnet, daß** das Spiel zwischen einem Finger (6) zum Einsatz kommt, der an einem einen der Geber betätigenden drehbaren Teil (6, 7, 8) angebracht ist, wobei der besagte Finger mit Spiel in eine Auskehlung (5) eindringt, die am Umfang einer Stellmuffe (3) eingearbeitet ist, die beweglich im Innern eines Körpers (1) gelagert ist und an ihrem freien Ende Mittel (4) für ihre Verbindung mit der Hauptwelle (14) trägt.

7. Erfassungsvorrichtung nach Anspruch 6, **dadurch gekennzeichnet, daß** die Stellmuffe (3) eine genutete Innenbohrung aufweist, in deren Inneres mit Umfangsspiel eine Antriebswelle (2) des anderen Gebers eindringt.
